# EUROPEAN PATENT APPLICATION

(11) **EP 3 190 432 A1**
(43) Date of publication of application: **12.07.2017**
(21) Application number: 16000004.8
(22) Date of filing: 07.01.2016
(51) Int. Cl.: G01T 1/20

(54) **DEVICE FOR READING AND ERASING A STIMULABLE PHOSPHOR**

(71) Applicant: Sopro S.A., 13705 La Citotat Cedex (FR)
(72) Inventor: Roëls, Sébastien, 83200 Toulon (FR); Mazuir, Alain, 83470 Saint Maximim La Sainte Baume (FR); Forneron, Elodie, 1304 Marseille (FR)
(74) Representative: Bausch, Thomas

(57) **Abstract**

Device for reading radiation image information recorded on a photostimulable material and for erasing residual information after reading, comprising
• a reading unit which generates a reading light beam and detection means for detecting light released,
• an erasing unit which generates erasing light,
• a conveying means which conveyes photostimulable material to the reading unit, then to the erasing unit and then out of the erasing unit,

the erasing unit beginning to erase the residual information from one part of the photostimulable material while another part of the photostimulable material is still being read out in the reading unit at the same time, and where
• an off-axis parabolic reflector is placed in the erasing unit,
• at least a portion of the erasing light is reflected by the parabolic reflector onto the photostimulable material,
• the parabolic reflector having a vertex point above the surface of photostimulable material and a focus point below the surface of photostimulable material, and
• both projections of vertex point and the focus point being placed between the entrance and the outlet of the erasing unit.

## Description

The present invention relates to an image reading and erasing device for reading radiation image information recorded on a photostimulable material. Such images are generated when applying high energy radiation as X-rays and especially in dental applications. Typical photostimulable materials are phosphor sheets.

Various Methods, apparatuses and devices for image reading and erasing are known from the state of the art. US 3,859,527 discloses an apparatus and a method for recording images on recording mediums which images correspond to high energy radiation patterns. The recording medium is exposed to a small area beam of long wave length radiation, this makes the material releasing the stored energy as light. An appropriate sensor receives the light emitted by the recording medium and transforms it to an image. EP 22 564 B1 discloses a method and an apparatus for obtaining a radiation image by use of a stimulable phosphor. After the emitted light is detected the panel of the photostimulable material is exposed to light which has the wavelength within the range of the stimulating light which was used before. This exposure was used to erase the panel from energy stored and by that way to prepare the panel for further use.

In general, the process for handling the infomation containing panel, sheets or similar photostimulable material after being exposed to radiation is since that time determined by the subsequent steps of first stimulating the phosphor sheet with light, then detecting the emitted light, and last erasing it with light similar to stimulating light. In order to avoid shadows on erased sheets the quantity of erasing light has to be some magnitude higher than that of the stimulating light before. When integrating these three steps into one single apparatus the problem was to solve how to avoid some erasing light could escape the last erasing step and contaminating the first stimulating light step. This problem came to be a severe one when the stimulating step and the erasing step were performed at the same time at different portions of the same sheet and the means for executing the stimulating step and those executing the erasing step had to be located very close together. Some light shield or light barrier was needed to prevent erasing light stimulating the sheet before reading.

Light barriers are described in the state of the art. US 5,237,177 discloses a radiation image information reading apparatus performing the above mentioned three steps and including a light intransmissive device to prevent erasing light from entering into the reading unit. The light intransmissive device comprises a light-intransmissive plate which has a slit for enabling the sheet to freely pass there through when the sheet is fed between the reading unit and the erasing unit by the sheet feed means. Tufted-fabric members such as Teremp (plush) which are brought into contact with the upper and lower surfaces of the sheet, additionally the rotatable rollers of the feed conveyor block light transmission too.

EP 170 810 B1 describes an irradiation image erase unit for use with stimulable phosphor sheet. With the image read-out unit and the image erasing unit combined into one system, the system should be compact in size and could be installed in a small space. EP 170 810 B1 emphasises on the measures to keep the interior of the image read-out unit as dark as possible while the amount of erasing light should be increased to generate intensive erasing light This is achieved by a special casing for the erasing unit and by efficient light blocking means between the read-out unit and the erasing unit. These means include feed rollers rolling on the surface of the sheets and an inlet slot for feeding the sheet into the erasing unit and an outlet slot. The casing of the erasing unit does have inner panel surfaces for reflecting the light emitted from the erasing light source means. Such panel surfaces do have a mirror finish or they are coated with a thin reflecting film. As the design is quite compact, erasing light has to be provided in very concentrated manner, In order to prevent overheating within the capsuled casing some fans provide cooling gas.

WO 20071036270 A1 describes another apparatus with light shields made from lamellae or fabrics with light absorbing means in a light barrier between the read-out unit and the erasing unit. Reflections are avoided by black coatings or by using of absorbent textile material, e.g. made from loop pile, except the walls of the erasing unit, which are designed to be diffusely reflecting.

All these light barriers do have in common that they absorb the erasing light, either by coloured lamellae or by fabrics with designed surfaces, and that the casings of the erasing units do have reflecting surfaces.

This leads to some inherent conflicts of goals. The more erasing light is absorbed, the more light has to be generated for erasing. The more light has to be generated, the more heat is generated. The more erasing light is generated and reflected in any directions, the more light will escape from the casing through small openings, which have to be shielded. The more light shieldings are installed to prevent light from escaping, the more heat is trapped and has to be withdrawn. The more heat would be trapped in a small place, the less compact the apparatus can be designed to prevent damages of phosphor sheets and of mechanics and of electronics.

The task of the invention is to overcome these conflicts of goals. The invention solves the problem with the means according to claim 1. The problem is solved by directing the erasing light by an off-axis parabolic reflector placed in the erasing unit to the sheet to be erased, the parabolic reflector having a vertex point above the sheet plane and a focus point below the sheet plane, both vertex point and focus point being placed between the planes of the sheet entrance and the sheet outlet of the erasing unit.

The erasing light is provided by LED having a high emission angle or by a laser. The wavelenght of LED and/or laser are near those waveleghts of the stimulating means in the reading unit. The reading unit and the feeding and conveying means are designed according to the well known standards as described in the state of the art. Feeding of the sheets into the combined reading and erasing unit can be performed by cassettes or manually one by one, the same when withdrawing the erased sheets from the unit.

The apparatus of the combined reading and erasing unit can be designed as a flat scanner or as an annular system as described e.g. in EP 1 929 369 A1, EP 1 929 370 A1 or EP 1 929 371 A1. The parabolic reflector is then designed accordingly and can have a paraboloidal shape or have the shape of a parabolic trough or have the shape of a toroidal reflector. If the design is a flat scanner and the LED light source or laser light source is a single point, a paraboloidal shape is most useful. If the design is a flat scanner and the LED light source is a line of several LEDs placed in a row perpendicular to the motion direction of the sheet but arranged parallel to the sheet, a parabolic trough is most useful as reflector. If the design is annular and the sheets are bended around a central axis, then the most useful shape is a toroidal reflector, the basic torus having the same central axis.

LED light production or laser light is produced in the erasing unit and directed either directly to the sheet or to the parabolic reflector, which reflects then the erasing light to the surface of the phosphor sheet. So almost all erasing light is directed to and absorbed by the phosphor sheet which is a major advantage of the invention. The vertical direction depends on the focus point and of the vertex point of the parabolic reflector.

In a prefered embodiment of the invention the focus point is located in the central axis of the LED emitting light, e.g. below the surface center point. The distance of the focus point from the sheet surface should be the same as the distance of the LED from the surface of the sheet or any other reflecting surface like a protective cover or a reflecting conveying means. In this embodiment the focus point and light source are placed on opposite sides of the surface of the sheet. In other words, the distance between LED and focus point should be the same as two times the distance between LED and sheet, or LED and conveying means, or LED and protective layer, or LED and plane between protective layer and conveying means. This ensures that light beams reflected by the phophor sheet to the parabolic reflector are reflected afterwards in vertical direction from that parabolic reflector to the phosphor sheet in order to maximize light transmission to the phosphor sheet according to Fresnel law. If it is desired that the light from the parabolic reflector is reflected in backward direction, i.e. in conveying direction of the sheet, the vertex point should be closer to the sheet inlet of the erasing unit.

As no erasing light beams are directed to the read-out unit, any further light shield becomes obsolete. The light concentration effect of the parabolic reflector reduces the overall amount of light which has to be generated by the LEDs or the laser, there is no light wasted within the erasure casing. This leads to less heating, and the requirements against light escaping from the erasing unit are much less stringent, the casing may even have openings as only certain areas are lighted and light is no more reflected within the whole erasure casing. The casing may not be encapsulated, if the reading unit, where the heat production is much less, is encapsulated instead and no light can come in.

The light of the LED or the laser can be directed just to the parabolic reflector which reflects the erasing light onto the sheet or it can be directed onto the sheet directly or it can be both in combination. Another embodiment is the usage of LED or laser which is directed to the parabolic reflector and a second LED light source directed onto the sheet. The paraboloidal structure of the parabolic reflector spreads the light beam coming from a point-shaped light source into a light-fan covering the entire width of the sheet uniformly.

When the sheet enters the erasing unit the erasing light comes into operation. At that moment the conveying means which are not yet covered by sheet material are exposed to erasing light. Therefore in an another embodiment of the invention the conveying means are equipped with means to reflect the erasing light back to the parabolic reflector. Typical conveying means are flat belts driven by rollers when a flat scanner design is chosen. The upper surface can be made of shiny silicone which generates specular reflections.

When the erasing light beams erase the residual information stored within the sheets, light is emitted by stimulating the sheet. This light emitted by stimulation has a different wavelength than erasing light. It is reflected by the parabolic reflector into the opposite direction compared to the direction of erasing light. In a further embodiment the parabolic reflector is therefore coated by material which reflects erasing light but absorbs or transmits light emitted by stimulation.

In a further embodiment of the invention the phosphor sheet in the erasing unit is protected by a protecting layer. This protective layer can be part of the phosphor sheet or part of the erasing unit. It can be made from transparent polyethylene which generates specular reflections.

The invention is now described in more detail on the basis of the figures. All figures assume the sheets being conveyed from left to right for demonstration, but it is obvious that the real device can be designed in various ways, e.g. that sheets are transported downwards or upwards or else. The figures show:
- Fig. 1: A general cross section of the image reading and erasing device
- Fig. 2-4 show positions of the vertex point 61 and the focus point 62

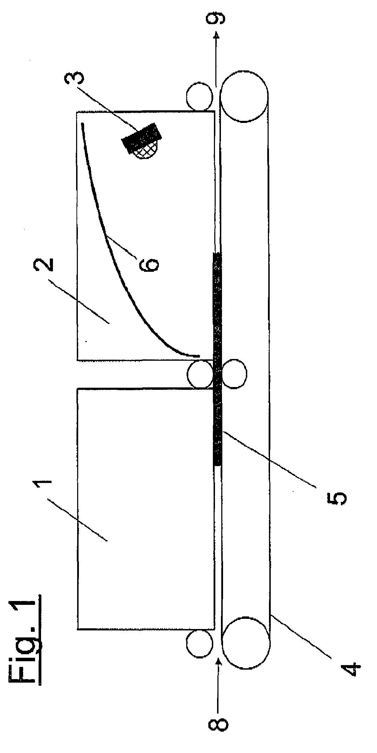

Fig. 1 shows a sketch of a cross-section of an image reading and erasing device with a read-out unit 1, an erasing unit 2, a light generation device 3, conveying means 4, a phosphor sheet 5, and a parabolic reflector 6. Sheets loaded with recorded information enter this device at the sheet inlet 8 and leave them erased and ready to be loaded again at the sheet outlet 9. In this cross-section view there is no difference between a paraboloidal shape or the shape of a parabolic trough or the shape of a toroidal reflector.

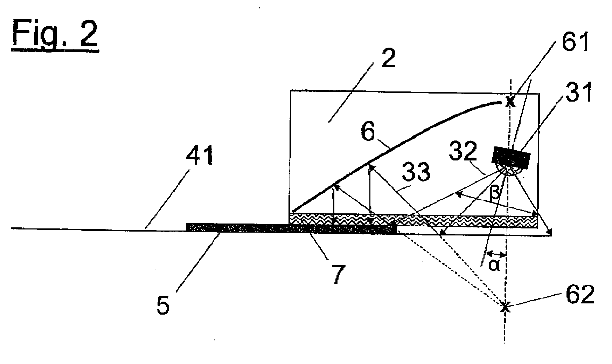

Fig. 2 shows the position of the vertex point 61 and the focus point 62 of the parabolic reflector 6 in the erasing unit 2. A LED 31 is mounted by an inclined angel a and has a high emission angle β, the light is directed to the sheet 5 and to the belt conveyor 41 which is equipped with a reflecting surface. The angle α should be chosen between 0° and 90°, Two beams 32 and 33 are shown when they strike the surface and are being reflected to the parabolic reflector. If beam 32 of erasing light 3 hits the surface of the protection layer in a flat angle, it is more focused to the sheet. If, however, beams of erasing light hit the surface of the protective layer 7 in a very flat angle they are reflected to the parabolic reflector and they cannot escape into the read-out unit. In this cross-section view there is also no difference between a paraboloidal shape or the shape of a parabolic trough or the shape of a toroidal reflector.

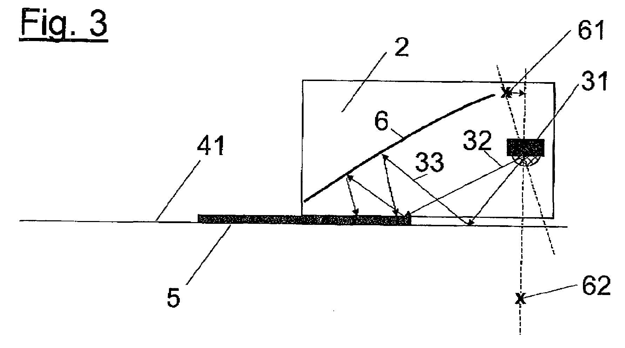

Fig. 3 shows another position of the vertex point 61 and the focus point 62 of the parabolic reflector 6 in the erasing unit. When the vertex point 61 is positioned before the focus point 62, seen in direction from inlet to outlet, light is reflected in conveying direction. In this cross-section view there is also no difference between a paraboloidal shape or the shape of a parabolic trough or the shape of a toroidal reflector.

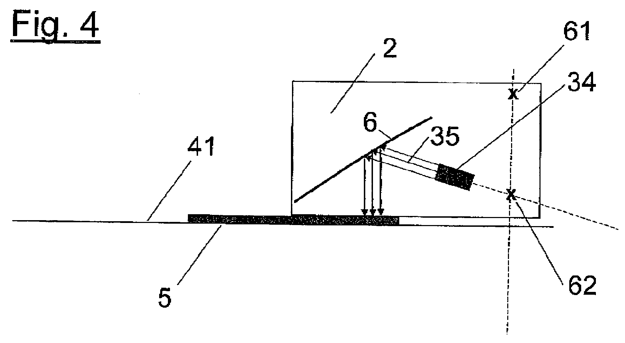

Fig. 4 shows another position of the vertex point 61 and the focus point 62 of the parabolic reflector 6 in the erasing unit, with a laser 34 as a light source. The beam 35 of the laser 34 is directed to the parabolic reflector 6, which is of paraboloidal shape in this case and fanned by the parabolic reflector onto the sheet. The same can be applied with a single LED which is directed to the parabolic reflector.

The main advantages of the invention are: The power necessary to erase the photostimulable sheets can be reduced by 5 to 15 percent. No erasing light can escape from the erasing unit into the read-out unit. No light shields are necessary. The device is very compact in size and there is no more any danger of overheating phosphor sheets or LEDs.

### List of reference numbers

- 1: read-out unit
- 2: erasing unit
- 3: light generation device
- 31: LED
- 32,33: light beam
- 34: laser
- 35: laser beam
- 4: conveying means
- 41: belt
- 5: phosphor sheet
- 61: venex point
- 62: focus point
- 7: protective layer
- 8: sheet inlet
- 9: sheet outlet

## Claims

1. Device for reading radiation image information recorded on a photostimulable material and for erasing residual information after reading, comprising
• a reading unit which generates a reading light beam and detection means for detecting light released,
• an erasing unit which generates erasing light,
• a conveying means which conveyes photostimulable material to the reading unit, then to the erasing unit and then out of the erasing unit,
the erasing unit beginning to erase the residual information from one part of the photostimulable material while another part of the photostimulable material is still being read out in the reading unit at the same time,
**characterized in that**
• an off-axis parabolic reflector is placed in the erasing unit,
• at least a portion of the erasing light is reflected by the parabolic reflector onto the photostimulable material,
• the parabolic reflector having a vertex point above the surface of photostimulable material and a focus point below the surface of photostimulable material, and
• both projections of vertex point and the focus point being placed between the entrance and the outlet of the erasing unit.

2. Device according to claim 1, **characterized in that** the erasing light is generated by a light emission diode (LED) with a high emission angle or by a laser or by both of them.

3. Device according to anyone of the claims 1 or 2, **characterized in that** the design of the read-out unit and the erasing unit is of the flat scanner type and the light source of the erasing unit is a single point source and that the parabolic reflector is paraboloidal shaped.

4. Device according to anyone of the claims 1 or 2, **characterized in that** the design of the read-out unit and the erasing unit is of the flat scanner type and the light source of the erasing unit is a line of several LEDs placed in a row perpendicular to the motion direction of the conveying system and that the parabolic reflector is shaped as a parabolic trough.

5. Device according to anyone of the claims 1 or 2, **characterized in that** the design of the read-out unit and the erasing unit is of the annular type and the light source of the erasing unit is a line of several LEDs placed in annular around the central axis and that the parabolic reflector is toroidally shaped, the basic torus having the same axis.

6. Device according to anyone of the claims 1 to 5, **characterized in that** the parabolic reflector is therefore coated by material which reflects erasing light but absorbs or transmits light emitted by stimulation.

7. Device according to anyone of the claims 1 to 6, **characterized in that** the photostimulable material is protected by a protecting layer in the erasing unit.

8. Device according to anyone of the claims 1 to 7, **characterized in that** the erasing light is generated by a LED and the focus point of the parabolic reflector is placed on the central axis of the emitted light radiation, and that the distance of the focus point from the LED is twice the distance of the LED from the surface of the photostimulable material.

9. Device according to anyone of the claims 1 to 8, **characterized in that** the erasing light is generated by a LED which is directed to the conveying means and the position of the vertex point in direction of the conveying direction is placed between the focus point and the sheet inlet in the erasing unit.

10. Device according to anyone of the claims 1 to 9, **characterized in that** the conveying means is covered with a reflecting surface.

11. Device according to claim 10, **characterized in that** the reflecting surface of the conveying means is made from shiny silicone.
